# EUROPEAN PATENT APPLICATION

(11) **EP 4 462 287 A1**
(43) Date of publication of application: **13.11.2024**
(21) Application number: 24175210.4
(22) Date of filing: 10.05.2024
(51) Int. Cl.: G06F 21/30, G06Q 20/36, H04L 9/40

(54) **SYSTEMS AND METHODS FOR PROVIDING ATTESTED VERIFICATION OF PERSONAL DATA**

(30) Priority: 09.05.2023 US 202363465168 P; 08.05.2024 US 202418658587
(71) Applicant: Tyco Fire & Security GmbH, 8212 Neuhausen am Rheinfall (CH)
(72) Inventor: OUELLETTE, Jason M., 8212 Neuhausen am Rheinfall (CH); SEELEY, Teresa, 8212 Neuhausen am Rheinfall (CH); HOLTON, Glenn Kilburn, 8212 Neuhausen am Rheinfall (CH); WHITE, Ross, 8212 Neuhausen am Rheinfall (CH); RUTER, Luke, 8212 Neuhausen am Rheinfall (CH); RICH, Brian, 8212 Neuhausen am Rheinfall (CH)
(74) Representative: Meissner Bolte Nürnberg

(57) **Abstract**

Example implementations include a method, apparatus and computer-readable medium for attested verification of personal data, comprising transmitting an access request to a verifying entity, wherein the access request is for a service, product, or information accessible solely to an authorized user. The implementations include receiving, from the verifying entity, a verification request that indicates at least one attribute of personal data that classifies a user as the authorized user. The implementations include generating a verification response indicating possession of the at least one attribute. The implementations include identifying, in a digital wallet, attested data issued by a trusted entity that confirms possession of the at least one attribute of the personal data. The implementations include transmitting, to the verifying entity, the verification response and the attested data without including the personal data. The implementations include receiving a grant or denial of the access request from the verifying entity.

## Description

### CROSS-REFERENCE TO RELATED APPLICATIONS

This application claims the benefit of United States Provisional Application No. 63/465,168, filed May 9, 2023, which is herein incorporated by reference in its entirety.

### TECHNICAL FIELD

The described aspects relate to data security and transaction systems.

### BACKGROUND

Aspects of the present disclosure relate generally to data security and transaction systems, and more particularly, to systems and methods for providing attested verification of personal data.

Data privacy is a core concern because there is a significant impact on people and companies when data breaches occur. When a user shares sensitive information such as a date of birth, social security number, address, etc., with a company, there is a possibility that a malicious entity may intercept communications or hack into the company database, thus jeopardizing the sensitive information. In many cases, the actual information is not needed by the company. For example, a bank may simply need to confirm whether a customer has a valid social security number (SSN), but does not need to know the actual number itself. Although revealing the SSN to the bank confirms that the customer has a valid SSN, once the SSN is stored in bank records, it is at risk of being extracted in a data breach.

Conventional security and transaction systems are unable to address these issues. Accordingly, there exists a need for improvements in such systems.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

An example aspect includes a method for attested verification of personal data, comprising transmitting an access request to a verifying entity, wherein the access request is for a service, product, or information accessible solely to an authorized user. The method further includes receiving, from the verifying entity, a verification request that indicates at least one attribute of personal data that classifies a user as the authorized user. Additionally, the method further includes generating a verification response indicating possession of the at least one attribute. Additionally, the method further includes identifying, in a digital wallet, attested data issued by a trusted entity that confirms possession of the at least one attribute of the personal data. Additionally, the method further includes transmitting, to the verifying entity, the verification response and the attested data without including the personal data. Additionally, the method further includes receiving a grant or denial of the access request from the verifying entity.

Another example aspect includes an apparatus for attested verification of personal data, comprising one or more memories and one or more hardware processors coupled with the one or more memories. The one or more hardware processors are configured, individual or in combination, to transmit an access request to a verifying entity, wherein the access request is for a service, product, or information accessible solely to an authorized user. The one or more hardware processors are configured, individual or in combination, to receive, from the verifying entity, a verification request that indicates at least one attribute of personal data that classifies a user as the authorized user. Additionally, the one or more hardware processors are configured, individual or in combination, to generate a verification response indicating possession of the at least one attribute. Additionally, the one or more hardware processors are configured, individual or in combination, to identify, in a digital wallet, attested data issued by a trusted entity that confirms possession of the at least one attribute of the personal data. Additionally, the one or more hardware processors are configured, individual or in combination, to transmit, to the verifying entity, the verification response and the attested data without including the personal data. Additionally, the one or more hardware processors are configured, individual or in combination, to receive a grant or denial of the access request from the verifying entity.

Another example aspect includes an apparatus for attested verification of personal data, comprising means for transmitting an access request to a verifying entity, wherein the access request is for a service, product, or information accessible solely to an authorized user. The apparatus further includes means for receiving, from the verifying entity, a verification request that indicates at least one attribute of personal data that classifies a user as the authorized user. Additionally, the apparatus further includes means for generating a verification response indicating possession of the at least one attribute. Additionally, the apparatus further includes means for identifying, in a digital wallet, attested data issued by a trusted entity that confirms possession of the at least one attribute of the personal data. Additionally, the apparatus further includes means for transmitting, to the verifying entity, the verification response and the attested data without including the personal data. Additionally, the apparatus further includes means for receiving a grant or denial of the access request from the verifying entity.

Another example aspect includes a computer-readable medium having instructions stored thereon for attested verification of personal data, wherein the instructions are executable by a processor to transmit an access request to a verifying entity, wherein the access request is for a service, product, or information accessible solely to an authorized user. The instructions are further executable to receive, from the verifying entity, a verification request that indicates at least one attribute of personal data that classifies a user as the authorized user. Additionally, the instructions are further executable to generate a verification response indicating possession of the at least one attribute. Additionally, the instructions are further executable to identify, in a digital wallet, attested data issued by a trusted entity that confirms possession of the at least one attribute of the personal data. Additionally, the instructions are further executable to transmit, to the verifying entity, the verification response and the attested data without including the personal data. Additionally, the instructions are further executable to receive a grant or denial of the access request from the verifying entity.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
Fig. 1 is a diagram of an attestation flowchart, in accordance with exemplary aspects of the present disclosure.
Fig. 2 is a diagram of personal data and attested data, in accordance with exemplary aspects of the present disclosure.
Fig. 3 is a block diagram of an example of a computer device having components configured to perform a method for attested verification of personal data;
Fig. 4 is a flowchart of an example of a method for attested verification of personal data;
Fig. 5 is a flowchart of additional aspects of the method of Fig. 4; and
Fig. 6 is a flowchart of additional aspects of the method of Fig. 4.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The present disclosure includes apparatuses and methods that provide attestation data in place of private information. The apparatuses and methods move to leverage a secure element and digital wallet to record attested confirmation of identity and credential data by a trusted authoritative source. This allows for the data to be trusted, without sensitive information being shared (ultimately reducing the dangers of security breaches). More specifically, the present disclosure describes an attestation application that can transact with the digital wallet of a user. The attestation application may be secured by a secure element or other security method such that user information such as names, social security numbers (SSNs), date of births (DOBs), addresses, credential data, etc., can be confirmed by the authoritative sources for those data elements. For example, whether a user is over the age of 18 may be confirmed by the Department of Motor Vehicles, whether the user is a citizen may be confirmed by a different government entity such as the Department of Homeland Security, etc. With this architecture and wallet structure, sensitive data such as the date of birth or citizenship number of the user are not revealed to the verifying entity. If the verifying entity later experiences a data breach, the sensitive information is not jeopardized as it remains with the user and trusted/issuing entities alone.

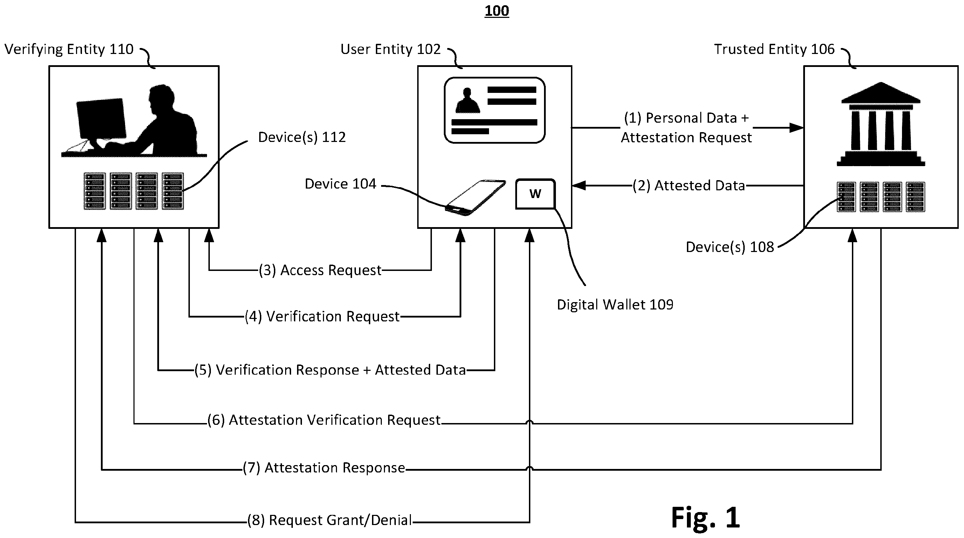

Fig. 1 is diagram 100 of an attestation flowchart, in accordance with exemplary aspects of the present disclosure. User entity 102 represents the user and comprises device 104. Device 104 may be any device that is capable of communicating with other devices and storing a digital wallet. Examples of device 104 include, but are not limited to, a smartphone, a laptop, a wearable device, and a tablet. Trusted entity 106 represents an institution that can reliably store and receive personal data provided by user entity 102. Trusted entity 106 may utilize device(s) 108, which include any device capable of communicating with other devices such as device 104 and attesting information. Examples of trusted entity 106 include a government institution, an employer, a school/university, a hospital, etc.

Consider an example of user entity 102 submitting a health record to trusted entity 106, which is a hospital. The personal data may include vaccination information, address, date of birth, etc. Consider another example of user entity 102 submitting a bank statement (confirming residence) and a photo identification card (confirming name, age, etc.) to trusted entity 106, which is a government entity such as the Department of Motor Vehicles.

In each example, device 104 may submit an attestation request along with the personal data. The attestation request may specifically request that trusted entity 106 confirm certain attributes of the personal data. These attributes may be predetermined and may be commonly requested by verifying entities. For example, the sensitive information in personal data may be the date of birth of user entity 102. The attested data may confirm an attribute of whether or not a user is over 18 years of age. In another example, the sensitive information in personal data may be the address of user entity 102. The attested data may simply confirm that the user resides in a particular area (e.g., town, city, state, etc.) without revealing the exact address.

In response to receiving the attestation request, device(s) 108 of trusted entity 106 may transmit attested data, which confirms the validity and authenticity of the attributes in the personal data, to device 104 of user entity 102. Device 104 may store the attested data in digital wallet 109.

Subsequently, user entity 102 may interact with a verifying entity 110, which may be any entity that requests information from the user and can potentially store the received information. For example, verifying entity 110 may be a company or a store in which the user is performing a transaction. Device 104 of user entity 102 may issue an access request to verifying entity 110. This access request may be for a particular service, product, information, etc., that is protected for authorized users only.

Suppose that verifying entity 110 is an airline. The user may request a boarding pass and device(s) 112 (e.g., any combination of servers, computers, smartphones, terminal devices, etc.) of verifying entity 110 may transmit a verification request to device 104. The verification request may query whether the user is eligible to fly into a particular country. More particularly, the verification request seeks to confirm that user entity 102 has a valid passport that is unexpired. In a traditional exchange, the user provides his/her passport to the airline. The passport includes information such as name, age, height, weight, passport number, etc., which is not all relevant information for the airline and includes sensitive information.

According to the present disclosure, device 104 transmits a verification response and a portion of the attested data stored in digital wallet 109 to verifying entity 110. For example, in the verification response, the user may state that he/she has a valid passport for travel and that the passport is unexpired. In this case, trusted entity 106 may be the government that issued the passport to user entity 102. Trusted entity 106 may provide, via device(s) 108, attested data that confirms that user entity 102 has a passport and that the passport is unexpired. This attested data may be stored in digital wallet 109 by device 104.

In some aspects, in response to receiving a verification request from verifying entity 110, device 104 may determine the relevant attested data to transmit to verifying entity 110. In some aspects, each attested data may be assigned a tag (e.g., "age," "expiration," "identification number," "gender," etc.).

In some aspects, verification request may explicitly request specific attributes (e.g., whether a passport is held by the user, whether the passport is expired, etc.). of personal data rather than the actual data itself (e.g., passport number, passport expiration date, etc.). In this case, device 104 transmits attested data with attributes assigned corresponding tags to device(s) 112. For example, an attested data tagged with "expiration" corresponds to an expiration date and whether information is expired or not.

It is also possible that verifying entity 110 asks for the actual data itself. In this case, device 104 transmits all attested data associated with the requested data to device(s) 112 based on the tag. For example, device(s) 112 may request the passport number and expiration date of the user passport and, in response, device 104 may transmit attested data indicating that the passport number is authentic, and the passport is unexpired.

In yet other aspects, verifying entity 110 may request a collection of personal data such as the passport in its entirety. In this case, device 104 may transmit all attested data associated with the requested collection to device(s) 112. For example, device 104 may transmit attested data indicating that the passport number is authentic, the passport is unexpired, the issuing country is America, the gender is male, etc.

In response to receiving the attested data and verification response from device 104, device(s) 112 may evaluate whether the verification response matches the attested data (e.g., whether the user's claim is supported by trusted entity 106). Accordingly, device(s) 112 may transmit an attestation verification request to trusted entity 106, which is configured to confirm or deny the accuracy of the verification response provided by device 104.

In some aspects, the attested data provided by trusted entity 106 is signed by a public encryption key of trusted entity 106. This prevents device 104 from tampering with the attested data as the private encryption key of trusted entity 106 (unknown to all other entities) is needed to access the attested data. For example, user entity 102 may be unable to change the information attested by trusted entity 106 for personal means.

Trusted entity 106 may unencrypt the attested data using its private encryption key and compare the verification response with the attested data. For example, in the verification response, user entity 102 may claim that the passport is unexpired and the attested data may also indicate that the passport is unexpired. Trusted entity 106 may thus determine that the information matches and transmit an attestation response to verifying entity 110. The attestation response may indicate whether the verification response is correct or incorrect.

Verifying entity 110 may then determine whether to grant or deny the access request of user entity 102 based on the attestation response. For example, if all information is accurate and acceptable in the verification response of the user, verifying entity 110 may grant the user request (e.g., issue a boarding pass). If there are discrepancies in the verification response and the attested data, verifying entity 110 may deny the access request.

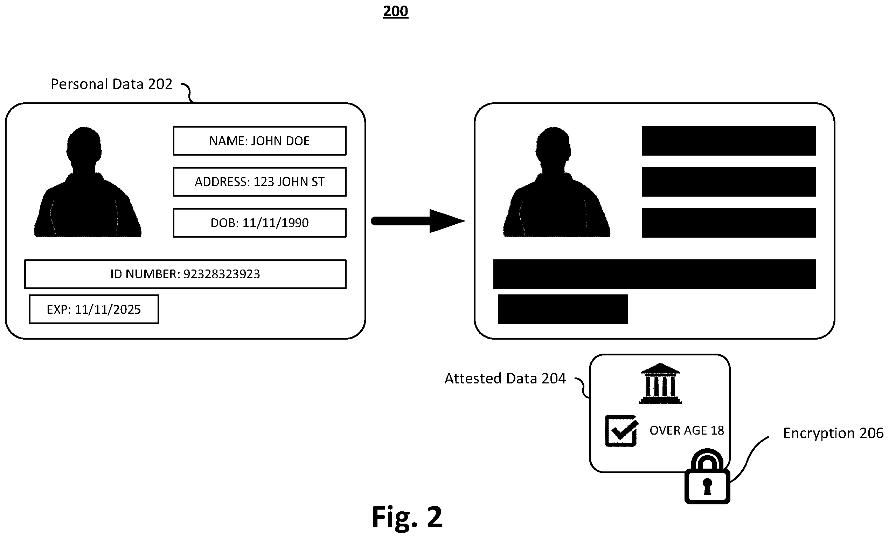

Fig. 2 is diagram 200 of personal data and attested data, in accordance with exemplary aspects of the present disclosure. In diagram 200, personal data 202 includes a plurality of personal data points such as an image of a user, a name, an address, a date of birth, an identification number, and an identification card expiration number. In a conventional transaction, verifying entity 110 may receive all of these sensitive data points and store them. However, using the apparatuses and methods of the present disclosure, these data points are not shared with verifying entity 110. Instead, attested data 204 that is particularly relevant to the verifying entity 110 is shared from a digital wallet of user entity 102. Attested data 204 may be protected by encryption 206 such that user entity 102 cannot tamper with its contents.

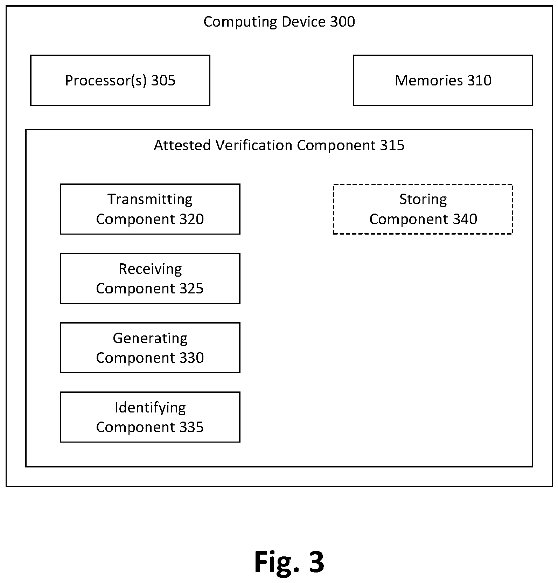

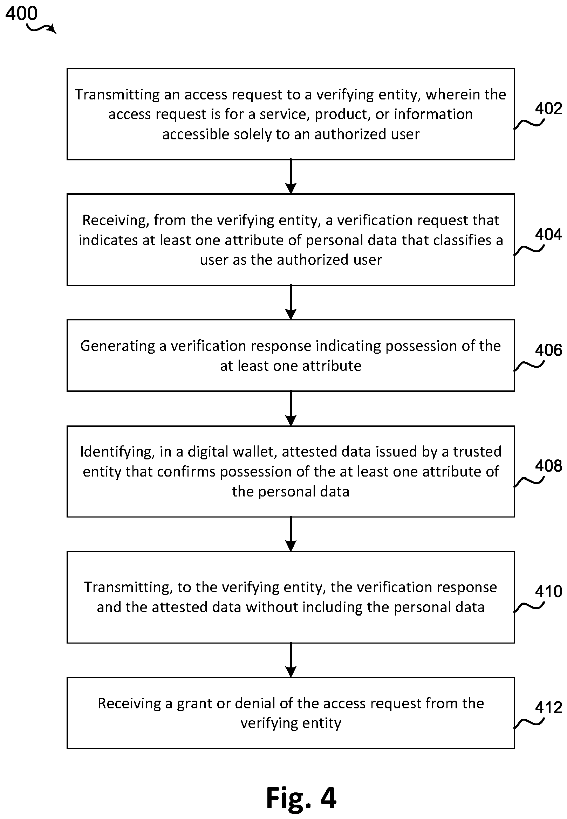

Referring to Fig. 3 and Fig. 4, in operation, computing device 300 may perform a method 400 for attested verification of personal data, such as via execution of attested verification component 315 by one or more hardware processor(s) 305 and/or one or more memories 310.

At block 402, the method 400 includes transmitting an access request to a verifying entity, wherein the access request is for a service, product, or information accessible solely to an authorized user. For example, in an aspect, computing device 300, one or more hardware processor(s) 305, one or more memories 310, attested verification component 315, and/or transmitting component 320 may be configured to or may comprise means for transmitting an access request to verifying entity 110 (e.g., an airline), wherein the access request is for a service, product, or information accessible solely to an authorized user (e.g., a board pass of a passenger).

At block 404, the method 400 includes receiving, from the verifying entity, a verification request that indicates at least one attribute of personal data that classifies a user as the authorized user. For example, in an aspect, computing device 300, processor(s) 305, memories 310, attested verification component 315, and/or receiving component 325 may be configured to or may comprise means for receiving, from verifying entity 110, a verification request that indicates at least one attribute of personal data that classifies a user as the authorized user.

For example, an airline may request information confirming that the passenger has a valid unexpired passport. This is usually provided in the form of a passport number and an expiration date.

At block 406, the method 400 includes generating a verification response indicating possession of the at least one attribute. For example, in an aspect, computing device 300, processor(s) 305, memories 310, attested verification component 315, and/or generating component 330 may be configured to or may comprise means for generating a verification response indicating possession of the at least one attribute. For example, generating component 330 may generate a message that includes a payload comprising the verification response. Referring to the airline example, the verification response may include a user statement "I have a valid unexpired passport."

At block 408, the method 400 includes identifying, in a digital wallet, attested data issued by a trusted entity that confirms possession of the at least one attribute of the personal data. For example, in an aspect, computing device 300, processor(s) 305, memories 310, attested verification component 315, and/or identifying component 335 may be configured to or may comprise means for identifying, in digital wallet 109, attested data issued by trusted entity 106 that confirms possession of the at least one attribute of the personal data. For example, trusted entity 106 may be the government entity that issued the passport to the user. At the time of passport creation, trusted entity 106 may provide attested data to the user (for storage in digital wallet 109). The attested data may confirm that the passport is valid and unexpired.

At block 410, the method 400 includes transmitting, to the verifying entity, the verification response and the attested data without including the personal data. For example, in an aspect, computing device 300, processor(s) 305, memories 310, attested verification component 315, and/or transmitting component 335 may be configured to or may comprise means for transmitting, to verifying entity 110, the verification response and the attested data without including the personal data. In an alternative or additional aspect, the personal data includes a data point indicative of sensitive information and the attested data includes a confirmation that the data point is valid without revealing the data point. By not revealing personal data (such as the passport number and the expiration date), the data is protected from a potential security breach of verifying entity 110.

Ultimately, this limits the spread of sensitive information (i.e., information that the user would not wish to reveal to unauthorized/malicious entities or information that can be used to track or behave as the user maliciously).

In an alternative or additional aspect, access to the attested data in the digital wallet 109 is protected by a user credential. In this aspect, the user credential is one or more of: a username and password combination, a biometric input, or a pattern input. This prevents anyone using the device of the user from impersonating the user because additional security measures are provided.

At block 412, the method 400 includes receiving a grant or denial of the access request from the verifying entity. For example, in an aspect, computing device 300, processor(s) 305, memories 310, attested verification component 315, and/or receiving component 335 may be configured to or may comprise means for receiving a grant or denial of the access request from verifying entity 110. For example, verifying entity 110 may determine that the verification response from the user corresponds to the attested data. In the scenario given of an airline, the airline may confirm that the attested data confirms the user statement of having a valid unexpired passport.

In an alternative or additional aspect, verifying entity 110 is configured to confirm, with trusted entity 106, whether the verification response is authentic and grant or deny the access request based on the whether the verification response is authentic. For example, verifying entity 110 may confirm whether the attested data is untampered by directly transacting with trusted entity 106. For example, the attested data may be encrypted with a public key of trusted entity 106. Trusted entity 106 may receive and decrypt the attested data using a private key of trusted entity 106. Trusted entity 106 may then compare the attested data with its own records and confirm its authenticity.

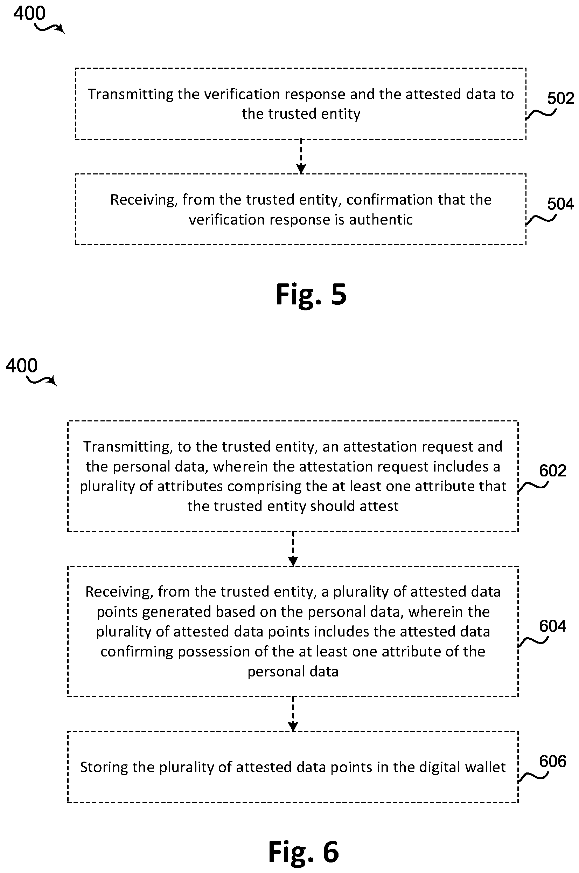

Referring to Fig. 5, in an alternative or additional aspect, at block 502, the method 400 may further include transmitting the verification response and the attested data to the trusted entity. For example, in an aspect, computing device 300, processor(s) 305, memories 310, attested verification component 315, and/or transmitting component 320 installed on device(s) 112 may be configured to or may comprise means for transmitting the verification response and the attested data to trusted entity 106.

In this optional aspect, at block 504, the method 400 may further include receiving, from the trusted entity, confirmation that the verification response is authentic. For example, in an aspect, computing device 300, processor(s) 305, memories 310, attested verification component 315, and/or receiving component 325 on device(s) 112 may be configured to or may comprise means for receiving, from trusted entity 106, confirmation that the verification response is authentic.

In an alternative or additional aspect, the attested data in digital wallet 109 is encrypted by a first encryption key (e.g., a public key) of trusted entity 106 and verifying entity 110 is configured to confirm whether verification response is authentic using blocks 502 and 504. Between these blocks, trusted entity 106 is configured to decrypt the attested data using a second encryption key (e.g., a private key) of trusted entity 106 and confirm that the verification response is authentic in response to determining that the verification response matches with the attested data that is decrypted.

Fig. 6 describes how the user receives the attested data from the trusted entity. The blocks of Fig. 6 occur before block 402 of Fig. 4. Referring to Fig. 6, in an alternative or additional aspect, at block 602, the method 400 may further include transmitting, to the trusted entity, an attestation request and the personal data, wherein the attestation request includes a plurality of attributes comprising the at least one attribute that the trusted entity should attest. For example, in an aspect, computing device 300, processor(s) 305, memories 310, attested verification component 315, and/or transmitting component 320 may be configured to or may comprise means for transmitting, to trusted entity 106, an attestation request and the personal data, wherein the attestation request includes a plurality of attributes comprising the at least one attribute that trusted entity 106 should attest. In the airline example, the plurality of attributes may include the validity of a passport, the active status of a passport, the issuing country of a passport, etc.

In this optional aspect, at block 604, the method 400 may further include receiving, from the trusted entity, a plurality of attested data points generated based on the personal data, wherein the plurality of attested data points includes the attested data confirming possession of the at least one attribute of the personal data. For example, in an aspect, computing device 300, processor(s) 305, memories 310, attested verification component 315, and/or receiving component 325 may be configured to or may comprise means for receiving, from trusted entity 106, a plurality of attested data points generated based on the personal data, wherein the plurality of attested data points includes the attested data confirming possession of the at least one attribute of the personal data.

In this optional aspect, at block 606, the method 400 may further include storing the plurality of attested data points in the digital wallet. For example, in an aspect, computing device 300, processor(s) 305, memories 310, attested verification component 315, and/or storing component 340 may be configured to or may comprise means for storing the plurality of attested data points in digital wallet 109.

One or more aspects of the apparatus and method of the present disclosure are further described in the following clauses.

Clause 1. An apparatus for attested verification of personal data, comprising: one or more memories; and one or more hardware processors coupled with the one or more memories and configured, individually or in combination, to: transmit an access request to a verifying entity, wherein the access request is for a service, product, or information accessible solely to an authorized user; receive, from the verifying entity, a verification request that indicates at least one attribute of personal data that classifies a user as the authorized user; generate a verification response indicating possession of the at least one attribute; identify, in a digital wallet, attested data issued by a trusted entity that confirms possession of the at least one attribute of the personal data; transmit, to the verifying entity, the verification response and the attested data without including the personal data; and receive a grant or denial of the access request from the verifying entity.

Clause 2. The apparatus of clause 1, the verifying entity is configured to: confirm, with the trusted entity, whether the verification response is authentic; and grant or deny the access request based on the whether the verification response is confirmed to be authentic.

Clause 3. The apparatus of any of the preceding clauses, wherein the attested data in the digital wallet is encrypted by a first encryption key of the trusted entity, and wherein the verifying entity confirms whether verification response is authentic by being configured to: transmit the verification response and the attested data to the trusted entity; and receive, from the trusted entity, confirmation that the verification response is authentic.

Clause 4. The apparatus of any of the preceding clauses, wherein the trusted entity is configured to: decrypt the attested data using a second encryption key of the trusted entity; and confirm that the verification response is authentic in response to determine that the verification response matches with the attested data that is decrypted.

Clause 5. The apparatus of any of the preceding clauses, wherein the one or more hardware processors are further configured, individually or in combination, to: transmit, to the trusted entity, an attestation request and the personal data, wherein the attestation request includes a plurality of attributes comprising the at least one attribute that the trusted entity should attest; receive, from the trusted entity, a plurality of attested data points generated based on the personal data, wherein the plurality of attested data points includes the attested data confirming possession of the at least one attribute of the personal data; and store the plurality of attested data points in the digital wallet.

Clause 6. The apparatus of any of the preceding clauses, wherein the personal data includes a data point indicative of sensitive information and the attested data includes a confirmation that the data point is valid without revealing the data point.

Clause 7. The apparatus of any of the preceding clauses, wherein access to the attested data in the digital wallet is protected by a user credential.

Clause 8. The apparatus of any of the preceding clauses, wherein the user credential is one or more of: a username and password combination, a biometric input, or a pattern input.

Clause 9. A method for attested verification of personal data, comprising: transmitting an access request to a verifying entity, wherein the access request is for a service, product, or information accessible solely to an authorized user; receiving, from the verifying entity, a verification request that indicates at least one attribute of personal data that classifies a user as the authorized user; generating a verification response indicating possession of the at least one attribute; identifying, in a digital wallet, attested data issued by a trusted entity that confirms possession of the at least one attribute of the personal data; transmitting, to the verifying entity, the verification response and the attested data without including the personal data; and receiving a grant or denial of the access request from the verifying entity.

Clause 10. The method of clause 9, the verifying entity is configured to: confirm, with the trusted entity, whether the verification response is authentic; and grant or deny the access request based on the whether the verification response is confirmed to be authentic.

Clause 11. The method of any of the preceding clauses, wherein the attested data in the digital wallet is encrypted by a first encryption key of the trusted entity, and wherein the verifying entity is configured to confirm whether verification response is authentic by: transmitting the verification response and the attested data to the trusted entity; and receiving, from the trusted entity, confirmation that the verification response is authentic.

Clause 12. The method of any of the preceding clauses, wherein the trusted entity is configured to: decrypt the attested data using a second encryption key of the trusted entity; and confirm that the verification response is authentic in response to determining that the verification response matches with the attested data that is decrypted.

Clause 13. The method of any of the preceding clauses, further comprising: transmitting, to the trusted entity, an attestation request and the personal data, wherein the attestation request includes a plurality of attributes comprising the at least one attribute that the trusted entity should attest; receiving, from the trusted entity, a plurality of attested data points generated based on the personal data, wherein the plurality of attested data points includes the attested data confirming possession of the at least one attribute of the personal data; and storing the plurality of attested data points in the digital wallet.

Clause 14. The method of any of the preceding clauses, wherein the personal data includes a data point indicative of sensitive information and the attested data includes a confirmation that the data point is valid without revealing the data point.

Clause 15. The method of any of the preceding clauses, wherein access to the attested data in the digital wallet is protected by a user credential.

Clause 16. The method of any of the preceding clauses, wherein the user credential is one or more of: a username and password combination, a biometric input, or a pattern input.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. An apparatus for attested verification of personal data, comprising:
- one or more memories; and
- one or more hardware processors coupled with the one or more memories and configured, individually or in combination, to:
- transmit an access request to a verifying entity, wherein the access request is for a service, product, or information accessible solely to an authorized user;
- receive, from the verifying entity, a verification request that indicates at least one attribute of personal data that classifies a user as the authorized user;
- generate a verification response indicating possession of the at least one attribute;
- identify, in a digital wallet, attested data issued by a trusted entity that confirms possession of the at least one attribute of the personal data;
- transmit, to the verifying entity, the verification response and the attested data without including the personal data; and
- receive a grant or denial of the access request from the verifying entity.

2. The apparatus of claim 1, the verifying entity is configured to:
- confirm, with the trusted entity, whether the verification response is authentic; and
- grant or deny the access request based on the whether the verification response is confirmed to be authentic.

3. The apparatus of claim 2,
wherein the attested data in the digital wallet is encrypted by a first encryption key of the trusted entity, and wherein the verifying entity confirms whether verification response is authentic by being configured to:
- transmit the verification response and the attested data to the trusted entity; and
- receive, from the trusted entity, confirmation that the verification response is authentic.

4. The apparatus of claim 3, wherein the trusted entity is configured to:
- decrypt the attested data using a second encryption key of the trusted entity; and
- confirm that the verification response is authentic in response to determine that the verification response matches with the attested data that is decrypted.

5. The apparatus of one of claims 1 to 4,
wherein the one or more hardware processors are further configured, individually or in combination, to:
- transmit, to the trusted entity, an attestation request and the personal data, wherein the attestation request includes a plurality of attributes comprising the at least one attribute that the trusted entity should attest;
- receive, from the trusted entity, a plurality of attested data points generated based on the personal data, wherein the plurality of attested data points includes the attested data confirming possession of the at least one attribute of the personal data; and
- store the plurality of attested data points in the digital wallet.

6. The apparatus of one of claims 1 to 5,
wherein the personal data includes a data point indicative of sensitive information and the attested data includes a confirmation that the data point is valid without revealing the data point.

7. The apparatus of one of claims 1 to 6,
wherein access to the attested data in the digital wallet is protected by a user credential.

8. The apparatus of claim 7,
wherein the user credential is one or more of: a username and password combination, a biometric input, or a pattern input.

9. A method for attested verification of personal data, comprising:
- transmitting an access request to a verifying entity, wherein the access request is for a service, product, or information accessible solely to an authorized user;
- receiving, from the verifying entity, a verification request that indicates at least one attribute of personal data that classifies a user as the authorized user;
- generating a verification response indicating possession of the at least one attribute;
- identifying, in a digital wallet, attested data issued by a trusted entity that confirms possession of the at least one attribute of the personal data;
- transmitting, to the verifying entity, the verification response and the attested data without including the personal data; and
- receiving a grant or denial of the access request from the verifying entity.

10. The method of claim 9, the verifying entity is configured to:
- confirm, with the trusted entity, whether the verification response is authentic; and
- grant or deny the access request based on the whether the verification response is confirmed to be authentic.

11. The method of claim 10,
wherein the attested data in the digital wallet is encrypted by a first encryption key of the trusted entity, and wherein the verifying entity is configured to confirm whether verification response is authentic by:
- transmitting the verification response and the attested data to the trusted entity; and
- receiving, from the trusted entity, confirmation that the verification response is authentic.

12. The method of claim 11,
wherein the trusted entity is configured to:
- decrypt the attested data using a second encryption key of the trusted entity; and
- confirm that the verification response is authentic in response to determining that the verification response matches with the attested data that is decrypted.

13. The method of one of claims 9 to 12, further comprising:
- transmitting, to the trusted entity, an attestation request and the personal data, wherein the attestation request includes a plurality of attributes comprising the at least one attribute that the trusted entity should attest;
- receiving, from the trusted entity, a plurality of attested data points generated based on the personal data, wherein the plurality of attested data points includes the attested data confirming possession of the at least one attribute of the personal data; and
- storing the plurality of attested data points in the digital wallet.

14. The method of one of claims 9 to 13,
wherein the personal data includes a data point indicative of sensitive information and the attested data includes a confirmation that the data point is valid without revealing the data point.

15. The method of one of claims 9 to 14,
wherein access to the attested data in the digital wallet is protected by a user credential, wherein the user credential is preferably one or more of: a username and password combination, a biometric input, or a pattern input.
